(19) Europäisches Patentamt
European Patent Office
Office européen des brevets

(11) Veröffentlichungsnummer: **0 001 615**
A1

## (12) EUROPÄISCHE PATENTANMELDUNG

(21) Anmeldenummer: 78101123.4

(22) Anmeldetag: 12.10.78

(51) Int. Cl.²: **F 24 D 3/02**
G 05 D 23/13, G 05 D 23/12

(30) Priorität: 26.10.77 DE 2747969

(43) Veröffentlichungstag der Anmeldung:
02.05.79 Patentblatt 79/9

(84) Benannte Vertragsstaaten:
CH FR GB NL SE

(71) Anmelder: Braukmann Armaturen AG
Bahnweg 2
CH-4852 Rothrist(CH)

(72) Erfinder: Vollmer, Rudolf
Friedrich-Hölderlin-Strasse 23
D-6950 Mosbach(DE)

(74) Vertreter: Schmid, Berthold, Dipl.-Ing. et al,
Falbenhennenstrasse 17
D-7000 Stuttgart 1(DE)

(54) Regelvorrichtung für eine Heizungsanlage.

㊲ Die Mischvorrichtung der Regelvorrichtung für eine Heizungsanlage besitzt ein Gehäuse (1) mit Anschluss (2) für Heisswasser, Anschluss (3) für Rücklaufwasser und Anschluss (4) für Vorlaufwasser. Ein thermostatisches Arbeitselement (15) im Gehäuse (1) wird vom Vorlaufwasser betätigt. Ein Rücklauffühler besteht aus dem Ausdehnungs-Fühlerelement (20), einem verschiebbaren Teil (21) und einer Verbindungskapillare (22). Das verschiebbare Teil (21) ist mit dem Arbeitskolben (17) des Arbeitselementes (15) gekoppelt und mittels einem doppelten Faltenbalg (23) betätigbar sowie federbelastet. Ein rohrförmiger Kolbenschieber (5) der Mischvorrichtung ist in Gegenrichtung federbelastet.

Bei Erhöhung der Rücklauftemperatur öffnet der Kolbenschieber die Zuströmöffnung (48) für das Heisswasser, während der Zuströmquerschnitt (51) für das Rücklaufwasser reduziert wird. Die Rücklauftemperatur wird von wenigstens einem Heizkörperthermostatventil beeinflusst. Erhöhter Wärmebedarf bewirkt erhöhte Rücklauftemperatur und infolgedessen verstärkte Beimengung von Heisswasser.

Erhöhung der Vorlauftemperatur verursacht eine gegenläufige Kolbenschieberbewegung mit Hilfe des Arbeitselementes (15). Die Zuströmöffnung (48) für das Heisswasser wird verkleinert und die Zuströmöffnung (51) wird das Rücklaufwasser vergrössert.

Der spezifische Arbeitshub der Vorlauffühlers ist kleiner als derjenige des Rücklauffühlers. Eine Selbstblockade wird durch entsprechende Arbeitsbereiche der Thermostatelemente und einen Anschlag (57) des Teils (21) verhindert.

./.

FIG. 3

0001615

Firma

Braukmann Armaturen AG

Rothrist (Schweiz)

Regelvorrichtung für eine Heizungsanlage

Die Erfindung bezieht sich auf eine Regelvorrichtung für
eine Heizungsanlage bei der mindestens ein Teil der Heiz
körper einzeln temperaturgeregelt ist. Eine Regelvorrichtung
dieser Art ist an sich bereits bekannt. Sie besitzt eine
Mischeinrichtung der ein Heizmedium, vorzugsweise ein
flüssiger Wärmeträger, beispielsweise Heißwasser zugeführt
wird, das von einer Beheizungseinrichtung, insbesondere
einem Heizkessel, erwärmt wurde. Außerdem weist sie noch
einen Anschluß für die von den Heizkörpern rückströmenden Wärmeträger auf. In der Mischeinrichtung werden nun diese beiden Teilströme miteinander vermengt und sie verlassen diese über einen dritten Anschluß, der mit einer zu den Heizkörpern führenden Leitung verbunden ist. Das Mischungsverhältnis zwischen den beiden eintretenden Strömen hängt vom jeweiligen Wärmebedarf ab. Im einen Extremfall fließt nur Rücklaufwasser od. dgl. durch den Mischer, während es im anderen Extremfall ausschließlich Heißwasser od. dgl. vom Kessel ist Zwischen diesen beiden Extremwerten sind alle denkbaren Mischungsverhältnisse möglich.

Die vorbekannte Regelvorrichtung arbeitet ebenso wie die erfindungsgemäße, ohne Hilfsenergie Beim Stand der Technik wird die Temperatur des Vorlaufs, also die Temperatur des die Mischeinrichtung verlassenden Heizmediums, in Abhängigkeit von der den Vorlauf durchströmenden Mediumsmenge pro Zeiteinheit geregelt. Dabei wird die umlaufende Menge mittels thermostatischer Heizkörperventile reguliert. Es entsteht auf diese Weise ein hydraulisch arbeitendes Regelsystem, an dem die Thermostatventile der Heizkörper und ein die umlaufende Heizmediums steuerndes Dreiwege-Mischventil beteiligt sind. Die Thermostatventile regeln die Zufuhr des warmen Vorlaufs zu jedem Heizkörper in Abhängig-

- 3 -

keit von den Schwankungen der Raumtemperatur. Daraus
resultierende Veränderungen der Durchflußmenge werden
durch das Dreiwege-Mischventil aufgenommen. Letzteres
bestimmt infolgedessen das Mischverhältnis, d.h. den
Anteil des heißen Mediums vom Heizkessel am Vorlauf
und folglich die Vorlauftemperatur. Jede Reaktion eines
Thermostatventils bewirkt aufgrund der damit verbundenen
Veränderung seiner Durchflußmenge eine Stellbewegung der
Mischeinrichtung in der Weise, daß sich das Mischungsverhältnis zwischen Kessel- und Rücklaufmedium ändert.
Die Temperatur des dem Heizkörper zugeführten Heizmediums
wird dem jeweiligen Bedarf angepaßt.

Nachteilig ist bei dieser Regelvorrichtung, daß zur Messung
des jeweiligen Massenstromes großflächige Meßwerke erforderlich sind, um den Differenzdruck zwischen Kesselvorlauf und Heizungsvorlauf zu erfassen und zur Steuerung
umzusetzen. Ein kleindimensioniertes Meßwerk erfordert
einen hohen Pumpendruck um an der Drosselstelle einen
genügend großen Differenzdruck zu erhalten. Hohe Pumpendrücke führen aber zu einer aufwendigen Konstruktion.

- 4 -

Die Aufgabe der Erfindung besteht infolgedessen darin,
eine Regelvorrichtung für eine Heizungsanlage der eingangs genannten Art zu schaffen, die auf ein großflächiges
Meßwerk ebenso wie auf hohe Pumpendrücke verzichten kann,
mit der sich aber die Heizungsvorlauftemperatur auf dem
jeweils kleinstmöglichen Wert halten läßt, um so eine
optimale Energieausnutzung zu erreichen.

Zur Lösung dieser Aufgabe wird eine Regelvorrichtung für
eine Heizungsanlage gemäß dem Oberbegriff des Anspruchs 1
vorgeschlagen, welche erfindungsgemäß dadurch gekennzeichnet ist, daß die Mischeinrichtung mittels einer von
der Temperaturdifferenz zwischen Vor- und Rücklauf beeinflußbaren Steuereinrichtung verstellbar ist. Die Vorlauftemperatur stellt sich dabei in sehr vorteilhafter Weise
selbsttätig in Abhängigkeit von der Temperaturdifferenz
zwischen Vorlauf-und Rücklauftemperatur ein. Durch entsprechende Ausbildung und Auslegung der Steuereinrichtung
wird die erwähnte Temperaturdifferenz selbsttätig auf den bezüglich Energieausnutzung optimalen Wert eingestellt. Wird beispielsweise unter Fremdwärmeeinfluß eine Raumtemperatur von 20°C

- 5 -

gehalten, so kann dabei die Heizungsanlage mit 20°C Vorlauf und 20°C Rücklauf fahren. In diesem Falle beträgt die Temperaturdifferenz zwischen Vorlauf und Rücklauf 0°C. Bei der höchsten Vorlauftemperatur von z.B. 90°C entsprechend der Temperatur des Zulaufs vom Heizkessel und einer Rücklauftemperatur von 70°C beträgt die Temperaturdifferenz 20°C. Das bedeutet, daß die Temperaturdifferenz bei den angegebenen Werten im Bereich von 0°C bis 20°C liegt und die Verlauftemperatur dem jeweiligen Energiebedarf optimal angepaßt wird. Insbesondere im Zusammenwirken mit den in jedem Raum angeordneten thermostatischen Heizkörperventilen läßt sich jeder Fremdwärmeanfall in idealer Weise rasch kompensieren. Eine einwandfreie Funktion dieser Regelvorrichtung ist selbst bei einem vergleichsweise einfachen Aufbau der Steuereinrichtung möglich.

In Weiterbildung der Erfindung wird vorgeschlagen, daß durch Regelung der Durchflußquerschnitte für die einzelnen Ströme oder Teilströme bei steigender Rücklauftemperatur die Zuströmmenge des vom Kessel kommenden heißen Mediums vergrößert und/oder die Menge des beizumischenden Mediums

- 6 -

verkleinert wird. Bei einer ersten Ausführungsform befindet sich im Rücklauf ein Drosselventil, dessen Öffnung einerseits von einem Fühler im Vorlauf und andererseits von einem Fuhler im Rücklauf bestimmt wird. Maßgebend für die Öffnungsstellung ist also die Temperaturdifferenz des Vorlaufs- und des Rücklaufs. Bei geringer Temperaturdifferenz also im Vergleich zur Vorlauftemperatur hoher oder ansteigender Rücklauftemperatur wird der Durchfluß durch dieses Drosselventil verstärkt, wodurch es dann auch zu einer Erhöhung der vom Kessel od. dgl. zuströmenden Mediummenge kommt. Nimmt hingegen die Rücklauftemperatur ab, was eine Vergrößerung der Temperaturdifferenz zwischen Vor- und Rücklauf zur Folge hat, so wird die Zuströmmenge des vom Kessel kommenden heißen Mediums - nachfolgend wird der Einfachheit halber lediglich noch von Wasser gesprochen - dadurch verringert, daß der Abströmquerschnitt im Rücklauf verkleinert wird. Hierbei muß noch beachtet werden, daß am gesamten Regelungsvorgang auch noch HeizkörperThermostatventile beteiligt sind, die in Abhängigkeit von der Temperatur des Raumes, in welchem sich der zugehörige Heizkörper befindet, den Durchfluß durch diesen Heizkörper mehr oder weniger stark drosseln bzw. freigeben. Bei Fremdwärmeeinfall oder Erreichen der am Thermostatventil eingestellten Raumtemperatur geht letzteres in eine gedrosselte oder die ge-Strömung durch diesen Heizkörper. Die relativ lange
Verweildauer des Heizwassers im Heizkörper ermöglicht
eine verstärkte Wärmeabgabe und somit Abkühlung des
Rücklaufs. Die abnehmende Rücklauftemperatur erhöht
ihrerseits die Temperaturdifferenz, welche den Öffnungsgrad des Drosselventils im Rücklauf bestimmt. Im letzteren
Falle führt die abnehmende Rücklauftemperatur zu einer
Drosselung des Rücklaufs und damit indirekt auch des Vorlaufs.
Somit wird entsprechend dem mangelnden Wärmebedürfnis
dieses Raumes der Zufluß von heißem Wasser gedrosselt
oder unterbunden. Dies führt dann in der angestrebten
Weise zu einer optimalen Energieausnutzung und der
kleinstmöglichen Vorlauftemperatur.

Eine andere Ausführungsform der Erfindung weist in Übereinstimmung mit der vorbekannten Regelvorrichtung eine
Mischeinrichtung für Vor- und Rücklauf auf. Infolgedessen
fließt dort, von Extremstellungen abgesehen, stets ein
Teilstrom des Rücklaufs zum Heizkessel oder Rücklaufstrang einer Fernheizung oder einem anderen Zulieferer
für Heißwasser, während der restliche Rücklauf in einem
den Erfordernissen jeweils entsprechenden Anteil dem ankommendem Heißwasser zugemischt wird. Die Wirkungsweise
dieser Regelvorrichtung ist, was das Prinzip angeht, dieselbe wie bei der ersten Auführungsform. Es sitzt wiederum im Vorlauf und im Rücklauf je ein Wärmefühler, die beide auf die Mischeinrichtung einwirken. Wenn sich beispielsweise die Vorlauftemperatur erhöht, so führt dies zu einer Vergrößerung des Zulaufquerschnitts für das Heißwasser und zu einer Verringerung des Zulaufquerschnitts für den Rücklauf. Nimmt die Rücklauftemperatur zu, so bewirkt dies eine Verkleinerung des Zulaufsquerschnitts für den Rücklauf, das heißt, eine Verringerung des beizumischenden Mediums und gleichzeitig aber auch eine Vergrößerung des Querschnitts für das Heißwasser. Insgesamt resultiert hieraus eine Erhöhung der Vorlauftemperatur. Die Erhöhung oder Abnahme der Rücklauftemperatur hängt wie vorne beschrieben, mit dem Öffnungsgrad des thermostatischen Ventils am Heizkörper und damit mit dem jeweiligen Wärmebedarf des Raumes zusammen. Es ist ohne weiteres einleuchtend, daß beim zuletzt beschriebenen Ausführungsbeispiel ein handelsübliches Drei-Wege-Mischventil verwendet werden kann.

Eine andere Ausgestaltung der Erfindung sieht vor, daß die Steuereinrichtung ein thermostatisches Arbeitselement mit einem Vorlauffühler und ein thermostatisches Arbeitselement mit einem Rücklauffühler aufweist. Die thermostatischen Arbeitselemente wirken gemäß der von ihren Fühlern ermittelten Temperatur auf das bewegbare Organ des Mischers ein und stellen das den beiden Temperaturen entsprechende
Mischungsverhältnis ein, wobei ihre Arbeitshübe sorgfältig
abgestimmt sein müssen. Hierbei ist es besonders vorteilhaft, daß sich die verschiebbaren Organe der thermostatischen Arbeitselemente bei Temperaturanstieg in gleicher
Richtung bewegen und sie insbesondere kraftschlüssig miteinander gekuppelt oder kuppelbar sind. Bei den verschiebbaren
Organen kann es sich in bekannter Weise um Arbeitskolben,
Faltenbälge u. dgl. handeln.

Eine besonders bevorzugte Ausführungsform der Erfindung
ist dadurch gekennzeichnet, daß die thermostatischen
Arbeitselemente auf einen Schieber od. dgl. einwirken,
der den Zuströmquerschnitt für das heiße Medium in dem
Maße vergrößert, wie er den Zuströmquerschnitt für das
beizumischende Medium verkleinert. Der Schieber kann mit
Zu- und/oder Abströmöffnungen im Gehäuse oder mit entsprechenden
gehäusefesten Gegenflächen zusammenwirken. Gemäß einer besonders bevorzugten Ausgestaltung der Erfindung ist der Schieber
als rohrförmiger Kolbenschieber ausgebildet, der in der
einen Verschiebeendlage mit seiner Mantelfläche wenigstens
eine Zuströmöffnung überdeckt und in der anderen Verschiebeendlage mit seiner in Durchströmrichtung hinteren, ringförmigen Strinfläche eine Zuströmöffnung schließt. Dabei
besteht die Zuströmöffnung aus dem Spaltraum zwischen der
erwähnten Stirnfläche und einer gehäusefesten, vorzugsweise

auch ringförmigen Gegenfläche.

Eine Weiterbildung der Erfindung besteht darin, daß das
thermostatische Arbeitselement mit dem Vorlauffühler als
Dehnstoffelement mit Arbeitskolben ausgebildet ist, dessen
Gehäuse fest mit dem Kolbenschieber verbunden und dessen
Arbeitskolben sich am einen Ende einer den Schieber konzentrisch durchsetzenden Spindel abgestützt ist, wobei der
Arbeitskolben entgegen der Durchströmrichtung des Heizmediums
durch das Schieberinnere ausfahrbar ist. Wenn der Arbeitskolben
bei einer Temperaturerhöhung des Vorlaufs durch die Spindel
am Ausfahren gehindert wird, so bewegt sich das Gehäuse des
Dehnstoffelements zusammen mit dem verschiebefest damit verbundenen Kolbenschieber in Durchströmrichtung des Heizmediums. Bei Abkühlung des Vorlaufwassers und stillstehendem
Arbeitskolben verschiebt sich das Gehäuse selbstverständlich
entgegen der Durchströmrichtung durch den Schieber. Die Verschiebebewegung des Gehäuses dieses Dehnstoffelements im Vorlauf gegenüber seinem Kolben ist somit gleich groß und
gleichgerichtet wie die Verschiebebewegung des Kolbenschiebers. Das Gehäuse des thermostatischen Arbeitselements
mit dem Vorlauffühler und der Kolbenschieber sind in zweckmäßiger Weise mittels eines Gewindes miteinander verbunden,
wobei man vorzugsweise am Gehäuse des Dehnstoffelements
das Bolzengewinde anbringt.

Eine weitere Variante der Erfindung sieht vor, daß das
andere Ende der Spindel zur kraftschlüssigen Verbindung
der verschiebbaren Organe der beiden thermostatischen
Arbeitselemente am verschiebbaren Organ des Arbeitselements
mit dem Rücklauffühler anliegt, wobei sich dieses verschiebbare Organ bei Erhöhung der Rücklauftemperatur vom
Spindelende wegbewegt, und daß das andere Spindelende fest
mit dem ihm zugeordneten, verschiebbaren Organ des Arbeitselements mit dem Vorlauffühler verbunden oder mittels
einer Feder daran angepreßt ist. Wenn sich also das verschiebbare Organ des Arbeitselements mit dem Rücklauffühler
von der Spindel wegbewegen will, so folgen aufgrund der
genannten Feder sowohl die Spindel als auch der Schieber
und das mit ihm verbundene Arbeitselement mit dem Vorlauffühler dieser Verschiebewegung. Entsprechendes gilt bei
einer gegenläufigen Bewegung infolge einer Erhöhung der
Rücklauftemperatur, wobei dann diese Belastungsfeder
gespannt wird. In weiterer Ausgestaltung der Erfindung
ist vorgesehen, daß die Feder insbesondere als Schraubendruckfeder ausgebildet ist und den Kolbenschieber entgegen
der Durchströmrichtung belastet. Ihr anderes Ende stützt
sich dabei im Gehäuseinnern ab.

Eine andere bevorzugte Ausführungsform der Erfindung besteht
darin, daß der verschiebbare Teil des Arbeitselements mit

den Rücklauffühler über eine Kapillare mit seinem Aus-
dehnungs-Fühlerelement und abnehmbar mit dem Gehäuse der
Kegelvorrichtung verbunden ist. Das Ausdehnungs-Fühlerelement wird an geeigneter Stelle placiert und vom Rücklauf umströmt. Bei einer Erwärmung dehnt sich der darin
enthaltene Dehnstoff aus. Dies führt zu einem Austritt des
Dehnstoffs, der über die Kapillare in das verschiebbare Teil
dieses Arbeitselements gelangt und dabei die Verschiebebewegung
bewirkt. Die Kapillarverbindung zwischen den beiden Teilen
dieses Arbeitselements ermöglicht die Verlegung der Vorlauf-
und der Rücklaufleitung entsprechend den sonstigen Erfordernissen dieser Heizungsanlage. Reparatur oder Austausch
dieses Arbeitselements sind aufgrund der abnehmbaren Befestigung des mit der Mischeinrichtung verbundenen Teils
dieses Arbeitselements problemlos vorzunehmen.

Gemäß einer Weiterbildung der Erfindung wird vorgeschlagen,
daß der verschiebbare Teil des Arbeitselements mit dem
Rücklauffühler mittels einer Feder, insbesondere Schraubendruckfeder, an das zugeordnete Spindelende gedrückt ist. Bei
lediglich formschlüssiger Verbindung erreicht man hierdurch
ein ständiges Anliegen dieses Arbeitselements bzw. seines verschiebbaren Teils an der Spindel.

Eine weitere Ausführungsform der Erfindung sieht vor,
daß nach der Mischeinrichtung in den Vorlauf ein
Differenzdruck-Überströmventil eingebaut ist. Es sorgt
dafür, daß bei geschlossenen Heizkörperventilen der Vorlauffühler ständig vom Vorlaufwasser umströmt und somit
die Vorlauftemperatur auch dauernd korrekt erfaßt wird.
Wenn nämlich das Heizwasser bei geschlossenen Heizkörperventilen in den Zuführungsleitungen zu diesen steht, kühlt
es sich im Laufe der Zeit ab und dies führt dann auch zu
einem Absinken der Temperatur am Vorlauffühler, weswegen
dieser mit zunehmender Dauer einen immer niedrigeren Wert
feststellt, obwohl sich an der Stellung der Mischeinrichtung
nichts geändert hat.

Gemäß einer anderen Variante der Erfindung wird vorgeschlagen, daß die thermostatischen Arbeitselemente mit
Gas als Ausdehnungsmedium gefüllt und unmittelbar gegeneinander geschaltet sind, wobei ein zwischen ihnen liegendes Stellglied auf die Steuereinrichtung einwirkt. Die Bewegung des Stellglieds resultiert aus der Differenz der
Bewegungen, welche die beiden Arbeitselemente einzeln durchführen würden. Die Kompressibilität des Ausdehnungsmediums
macht die Gegeneinanderschaltung möglich. Hinsichtlich der weiteren Auswirkungen der Bewegung des Stellglieds besteht kein Unterschied zu den vorbeschriebenen Ausführungsformen mit Dehnstoffelementen.

Der spezifische Arbeitshub des Vorlaufsfühlers ist in Weiterbildung der Erfindung kleiner als derjenige des Rücklauffühlers. Wenn sich also die Temperatur des Vorlaufs und des Rücklaufs um je 5 $^{o}$C erhöht, so führt dies insgesamt zu einer weiteren Erhöhung der Vorlauftemperatur, weil im Falle einer Mischeinrichtung der Kolbenschieber dabei den Eintrittsquerschnitt für das Heißwasser vergrößert und denjenigen für den Eintritt des Rücklaufs verringert.

Gemäß einer weiteren Ausgestaltung der Erfindung ist vorgesehen, daß das thermostatische Arbeitselement mit dem Rücklauffühler einen bei niedrigen Temperaturen wirksamen Endanschlag aufweist und das thermostatische Arbeitselement mit dem Vorlauffühler einen Arbeitsbereich besitzt, der über dem Temperaturbereich, in welchem der Endanschlag wirksam ist, hinausgeht. Diese Ausbildung der Erfindung stellt sicher, daß bei Verwendung einer Mischeinrichtung der Kolbenschieber od. dgl. auch bei extrem niedrigen Raumtemperaturen eines beispielsweise ungeheizten Raumes den Zufluß für das Heißwasser vom Kessel od. dgl. nicht vollständig absperrt und damit das Anfahren des geregelten Heizvorganges be- oder gar verhindert. Bekanntlich führt ein Absinken der Rücklauftemperatur zu einer Verringerung des Zuströmquerschnitts für das Heißwasser. Beim Abschalten einer Heizung sinkt aber gleichzeitig auch die Temperatur im Vorlauf ab. Das aber wirkt sich in einer gegenläufigen Verschiebebewegung des Kolbenschiebers aus. Im Endeffekt ist dann die Differenz dieser beiden Bewegungen wirksam. Wenn aber ab einer gewissen Niedrigsttemperatur der Arbeitshub des mit dem Rücklauffühler verbundenen Arbeitselements unterbunden wird, so kann sich aufgrund des zumindest bei niedrigen Temperaturen größeren Temperaturbereichs des Vorlauffühler-Arbeitselement der Kolbenschieber noch so lange entgegen seiner Durchströmrichtung bewegen, bis schließlich auch der Rückhub des Vorlauffühler-Arbeitselements zu Ende ist. Dadurch entsteht dann der für das Anfahren notwendige Spalt durch den Heißwasser beim Wiederanfahren der Heizung in die Mischeinrichtung eintreten kann.

Ein besonderer Vorteil dieser Erfindung besteht darin, daß man das Arbeitselement mit dem Rücklauffühler aufgrund seiner lösbaren Verbindung abnehmen und durch einen Sollwertsteller ersetzen kann. Auf diese Weise erhält man einen Brauchwassermischer, mit dem sich die Energie in gleicher Weise optimal ausnutzen läßt.

In der Zeichnung sind Ausführungsbeispiele der Erfindung dargestellt. Es zeigen:

Fig. 1          Schematisch eine Heizungsanlage, mit einer ersten Ausführungsform der erfindungsgemäßen Regelvorrichtung,

Fig. 2          schematisch eine Heizungsanlage mit einer

                zweiten Ausführungsvariante der Regelvorrichtung,

Fig. 3          einen vertikalen Längsmittelschnitt durch die Mischeinrichtung der Regelvorrichtung der Figur 2,

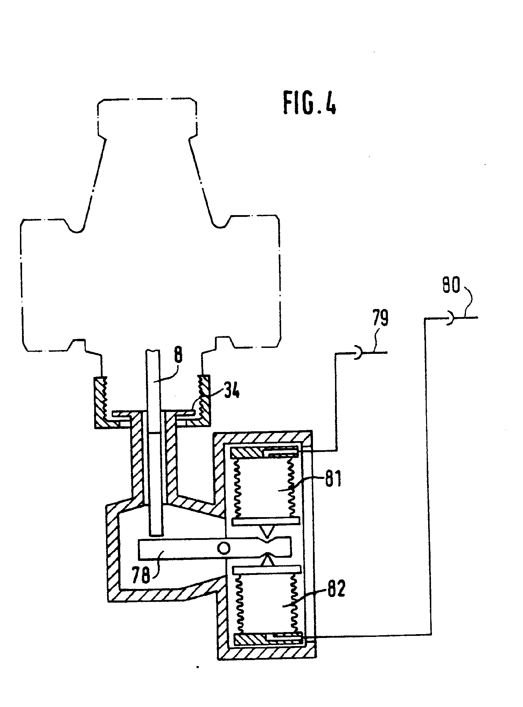

Fig. 4          schematisch ein Detaill einer dritten Variante der Erfindung.

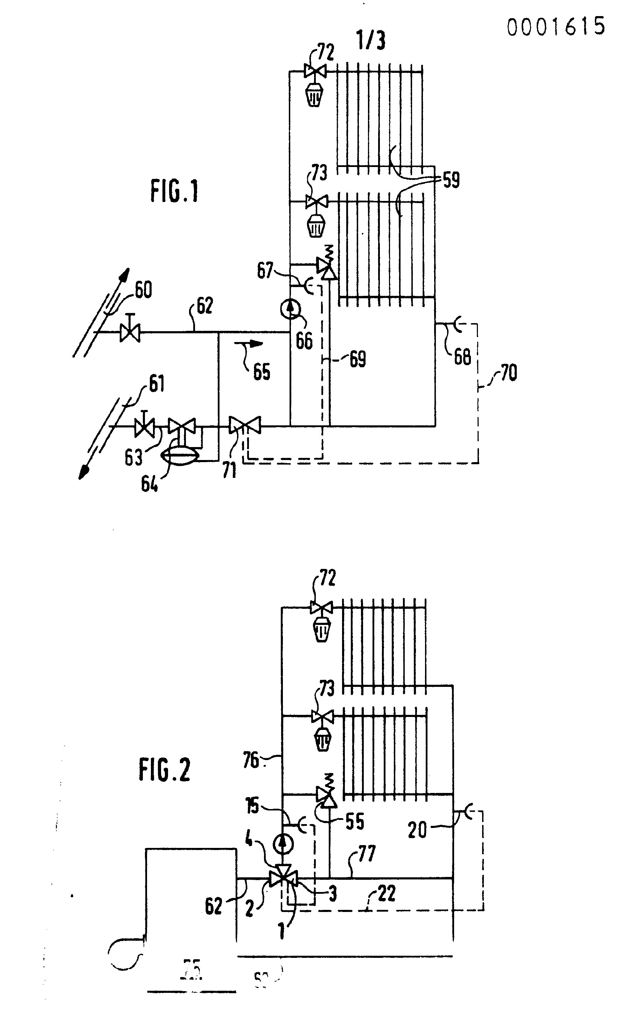

Das Gehäuse 1 der Mischeinrichtung der erfindungsgemäßen Regelvorrichtung der in Fig. 2 gezeigten Variante besitzt einen Anschlußstutzen 2 für das von einem Heizkessel kommende heiße Medium. Vorzugsweise handelt es sich dabei um Heißwasser, weswegen nachfolgend anstelle des Wortes "Medium" das Wort "Wasser" verwendet wird, ohne daß dies einschränkend sein soll. Des weiteren besitzt das Gehäuse 1 einen Anschlußstutzen 3 für Rücklaufwasser und einen Anschlußstutzen 4 für den Vorlauf. Die Anschlußstutzen 2 und 3 verlaufen vorzugsweise koaxial.

Der Anschlußstutzen 4 steht zur Achse der Anschlußstutzen
2 und 3 senkrecht.

Im Gehäuse 1 ist ein rohrförmiger Kolbenschieber 5 in
Richtung des Doppelpfeils 6 auf und ab verschiebbar.
Gegenüber dem Gehäuse 1 ist er mit Hilfe eines Dichtringes,
vorzugsweise O-Ringes 7 abgedichtet. Zugleich ist der
Kolbenschieber 5 auch längsverschiebbar an einer Spindel 8
gelagert. Diese durchsetzt eine zentrische Buchse 9, die mit
dem rohrförmigen Schieberaußenteil 10 über Rippen 11 verbunden ist. Letztere und die Buchse 9 überragen das Schieberaußenteil 10 nach oben hin, d.h. in Richtung des Anschlußstutzens 4. Auf den Rippen liegt das untere Ende einer
Schraubendruckfeder 12 auf, deren oberes Ende im Gehäuseinnern, vorzugsweise im Bereich des Anschlußstutzens 4,
abgestützt ist. Die zentrische Bohrung 13 der Buchse 9 des
Kolbenschiebers 5 ist an ihrem gegen die Schraubendruckfeder
12 weisenden Ende erweitert und mit einem Innengewinde 14
versehen. In dieses ist das Gehäuse 5 eines als Dehnstoffelement ausgebildeten thermostatischen Arbeitselements 16
eingeschraubt. Der Arbeitskolben 17 des letzteren liegt
an dem ihm zugeordneten oberen Ende der Spindel 8 an,
wobei eine formschlüssige Verbindung mittels Kuppe und
Kalotte gebildet ist. Der Kolbenschieber 5 wird vorzugsweise aus Kunststoff hergestellt. Außerdem besitzt die
Spindel 8 einen Bund 18 od. dgl., der die Relativbewegung von Spindel und Kolbenschieber in der einen Richtung begrenzt

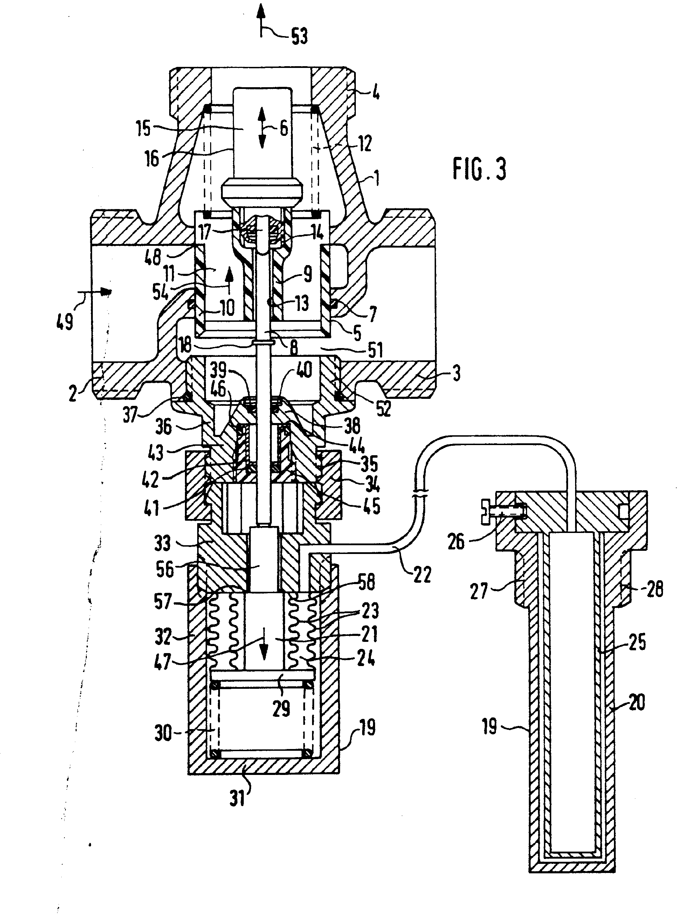

Während das thermostatische Arbeitselement mit dem Vorlauffühler beim Ausführungsbeispiel der Fig. 3 aus einem sogenannten Dehnstoffelement besteht, wobei das Gehäuse zugleich den Vorlauffühler bildet, besteht das thermostatische Arbeitselement 19 mit dem Rücklauffühler gewissermaßen aus drei Teilen, nämlich dem Ausdehnungs-Fühlerelement 20, also demjenigen Teil, welches die Temperatur des Rücklaufs unmittelbar abkühlt, dem verschiebbaren Teil 21 und der beide verbindenden Kapillare 22. Zum verschiebbaren Teil 21 dieses thermostatischen Arbeitselements 19 gehört noch ein doppelter Faltenbalg 23, dessen Zwischenraum 24 mit Dehnstoff gefüllt ist. Dehnstoff befindet sich auch im Innern der Kapillare 22 und des topfförmigen Teils 25 des Ausdehnungs-Fühlerelements 20, welches mittels einer Schraube 26 in einer Einschraubhülse 27 mit Außengewinde 28 gehalten ist.

An einer Platte 29 des verschiebbaren Teils 21 des thermostatischen Arbeitselements 19 mit dem Rücklauffühler liegt das eine Ende einer Schraubendruckfeder 30 an, deren anderes Ende am Boden 31 einer topfförmigen Schraubhülse 32 abgestützt ist. Die aus dem verschiebbaren Teil 21, dem doppelten Faltenbalg 23 der Schraubendruckfeder 30 und der Schraubhülse 32 sowie einem Montagestück 33 bestehende

Einheit ist abnehmbar am Gehäuse 1 des Dreiwege-Kolbenschiebers gehalten Hierzu dient eine Überwurfmutter 34
Sie wird auf ein Gewinde 35 eines nach unten ragenden,
abnehmbaren Gehäuseteils 36 aufgeschraubt. Letzteres ist
gegenüber dem übrigen Gehäuse mittels eines Dichrings,
vorzugsweise O-Rings 37, abgedichtet

In einer Querwand 38 ist die Spindel 8 dichtend geführt.
Hierzu dient ein O-Ring 39, der durch einen eingebördelten
Ring 40 gehalten wird Eine zweite Abdichtung der Spindel
erreicht man mit Hilfe eines weiteren O-Rings 41, der an
einer Schraubhülse 42 abgestützt ist und von einem topfförmigen Element 43 niedergehalten wird. Zwischen einen
Außenrand 44 des topfförmigen Elements 43 und das in der
Zeichnung obere Ende 45 der Schraubhülse 42 ist ein zusätzlicher O-Ring 46 eingespannt Er dichtet die genannten
Teile gegenüber dem Gehäuseteil 36 ab

Wenn sich die Rücklauftemperatur erhöht, dehnt sich der
im topfförmigen Teil 25 des Ausdehnungs-Fühlerelements 20
befindliche Dehnstoff aus und die dadurch austretende
Dehnstoffmenge gelangt über die kapillare 22 in den
Zwischenraum 24 des doppelten Faltenbalgs 23. Infolgedessen weicht das verschiebbare Teil 21 des thermostatischen Arbeitselements 19 mit dem Rücklauffühler im Sinne des
Pfeil's 47 aus. Dabei wird dann die Schraubendruckfeder 30

gespannt Dieser Abwärtsbewegung folgen aufgrund der
Kraft der Schraubendruckfeder 12 sowohl die Spindel 8
als auch der Kolbenschieber 5. Damit wird die Zuströmöffnung 48 für das in Pfeilrichtung 49 zugeführte Heißwasser
vom Heizkessel, einem Wärmetäuscher, einem Fernheiznetz
od. dgl. geöffnet bzw. vergrößert. Je größer der Anteil
des Heißwassers an dem in Pfeilrichtung 53 austretenden Mischwasser ist, umso geringer kann der Anteil
des über den Stutzen 3 in das Gehäuse 1 einströmenden
Rücklaufwassers sein. Der nicht durch das Gehäuse 1
strömende Teil des Rücklaufwassers fließt über eine andere
Verbindung zum Heizkessel od. dgl. zurück und wird dort
wieder erwärmt. In dem Maße, in dem sich die Zuströmöffnung
48 für das Heißwasser vergrößert, verringert sich die Zuströmöffnung 51 für das Rücklaufwasser. Sie wird gebildet
durch das nach unten weisende, von der Schraubendruckfeder
12 entfernte Ende des Schieberaußenteils 10 und das zugeordnete,
nach oben weisende, ebenfalls ringförmige Ende 52 des Gehäuses
bzw. Gehäuseteils 36. Wenn die Rücklauftemperatur abnimmt,
bewegen sich das verschließbare Teil 21, die Spindel 8
und der Kolbenschieber 5 entgegen dem Pfeil 47, wobei dann
die Druckfeder 12 gespannt und die Druckfeder 30 entlastet
wird. Dabei vergrößert sich dann der Zuströmquerschnitt 51
für das Rücklaufwasser, während sich der Zuströmquerschnitt
48 für das Heißwasser verkleinert.

Wenn sich die Vorlauftemperatur erhöht, dehnt sich der

- 21-

Dehnstoff im Innern des Gehäuses 15 des thermostatischen
Arbeitselements 16 mit dem Vorlauffühler, der, wie gesagt,
durch das Gehäuse 15 gebildet wird, aus. Weil aber der Arbeitskolben 17 durch die Spindel 8 am Ausfahren gehindert wird,
verschiebt sich das Gehäuse 15 relativ zum Arbeitskolben 17
in Richtung des Pfeils 53 nach oben. Nachdem aber dieses Gehäuse über das Gewinde 14 fest mit dem Kolbenschieber 5 gekuppelt ist, macht letzterer diese Aufwärtsbewegung mit. Infolgedessen bewirkt eine Erhöhung der Vorlauftemperatur eine
Verringerung des Zuströmquerschnitts 48 für das Heißwasser
und gleichzeitig eine Vergrößerung des Zuströmquerschnitts
51 für das Rücklaufwasser. Selbstverständlich hat eine Abkühlung der Vorlauftemperatur den umgekehrten Effekt.
Aufgrund der gegenseitigen Abhängigkeit von Vorlauf- und Rücklauftemperatur und der Kupplung der Arbeitselemente des Vorlauf- und des Rücklauffühlers müssen selbstverständlich die
spezifischen Arbeitshübe des Vorlauffühlers und des Rücklauffühlers aufeinander abgestimmt werden, Vorzugsweise ist der
spezifische Arbeitshub des Vorlauffühlers kleiner als derjenige des Rücklauffühlers, d.h. gleiche Temperaturänderungen
am Vorlauf- und am Rücklauffühler haben eine größeren Arbeitshub des Rücklauffühlers im Vergleich zu demjenigen des Vorlauffühlers zur Folge. An dieser Stelle wird allerdings nochmals
darauf hingewiesen, daß an der gesamten Regelung auch noch
der oder die thermostatischen Arbeitselemente des oder der

- 22 -

Heizkörperventile beteiligt sind.

Der verschiebbare Teil 21 des thermostatischen Arbeitselements 19 des Rücklauffühlers besitzt einen abgesetzten
Bolzen, dessen im Durchmesser dünnerer Teil 56 in einer
zentrischen Bohrung des Montagestücks 33 verschiebbar geführt ist. Zugleich entsteht dadurch eine ringförmige Anschlagfläche, die mit der zugekehrten Stirnfläche 58 des
Montagestücks 33 zusammenwirkt. Die Anschlagfläche bildet
einen Endanschlag 57 für den verschiebbaren Teil 21 des
thermostatischen Arbeitselements 19. Er wird wirksam, wenn
die Rücklauftemperatur unter einem vorbestimmten Wert absinkt.
Dies gilt insbesondere beim Abstellen der Heizanlage in der
warmen Jahreszeit. In vorteilhafter Weise besitzt nun das
thermostatische Arbeitselement 16 mit dem Vorlauffühler einen
Arbeitsbereich der über den Temperaturbereich hinausgeht, in
welchem der genannte Endanschlag 57 wirksam ist. Infolgedessen kann der Kolbenschieber 5 bei einem weiteren Absinken der Temperatur des Heizungsmediums eine entgegen
der Durchströmrichtung 54 gerichtete Verschiebebewegung
durchführen. Dies ist insofern wichtig, als beim Wirksamwerden des Endanschlags 57 die Zuströmöffnung 48 für das
Heißwasser geschlossen sein kann. Würde diese nachfolgende
Öffnung der Zuströmrichtung 48 bei weiterer Verminderung
der Vorlauftemperatur nicht stattfinden, so könnte das heiße

-23-

Wasser bei Wiederinbetriebnahme der Heizungsanlage nicht mehr an das thermostatische Arbeitselement 16 gelangen und die Anlage würde in einer Selbstblockierung verharren.

In Figur 1 ist die Heizungsanlage mit den schematisch eingezeichneten Radiatoren 59 an ein Fernheiznetz angeschlossen. Der Zuführungsstrang dieser Fernheizung ist mit 60 und die Rückleitung mit 71 bezeichnet. Die Zuführungsleitung der Hausheizung trägt die Bezugsziffer 62, während die hauseigene Rückleitung mit 63 bezeichnet ist. Zwischen beiden ist ein Differenzdruck-Regler 64 geschaltet. In Zuströmrichtung 65 gesehen, befindet sich hinter der Pumpe 66 ein Temperatur-Vorlauffühler 67. In der Rücklaufleitung ist ein Temperatur-Fühler 68 eingebaut. Der Fühler 67 ermittelt die Vorlauftemperatur, während der Fühler 68 zur Feststellung der Rücklauftemperatur dient. Die ermittelten Werte werden über die gestrichelt eingezeichneten Leitungen 69 bzw. 70 an die Steuereinrichtung 71 übermittelt. Diese besteht aus einem Durchgangsventil, auf dessen Ventil-Verschlußorgan ein thermostatisches Arbeitselement des Vorlauffühlers und ein thermostatisches Arbeitselement des Rücklauffühlers einwirken. Wird aufgrund der ermittelten Temperaturdifferenz zwischen Vor- und Rück-

- 24 -

-24-

lauf der Durchfluß durch das Ventil der Steuereinrichtung 71 gedrosselt, so vermindert sich dadurch automatisch auch der Zufluß über die Zuführungsleitung 62 Eine weitere Drosselung des Vorlaufs kann über die Heizkörper-Thermostatventile 72 und 73 vorgenommen werden. Deren Öffnung hängt allerdings ausschließlich von der jeweiligen Raumtemperatur ab. Dem Sinne nach arbeitet die Steuereinrichtung 71 der in Figur 1 gezeigten Heizungsanlage in gleicher Weise wie die ausführlich beschriebene Steuereinrichtung 16,19 der Figur 3.

Letztere ist bei der in Figur 2 dargestellten Heizungsanlage eingebaut. Der Fühler für die Vorlauftemperatur, welcher durch das Gehäuse 15 des thermostaitschen Arbeitselements 16 gebildet ist, wurde bei dieser Prinzipdarstellung separat gezeichnet, weil das thermostatische Arbeitselement mit dem Vorlauffühler durchaus gleich aufgebaut sein kann, wie dasjenige mit dem Fühlerelement 20 zur Ermittlung der Rücklauftemperatur. Leitungen 22 bzw. 74 führen zu den Arbeitselementen in dem Drei-Wege-Kolbenmischer. Die Zuführungsleitung 62 und die Rückleitung 63 für das Heizmedium bzw. Heizungswasser sind beim Ausführungsbeispiel der Figur 2 mit einem Heizkessel 75 verbunden. Stattdessen könnte es sich beispielsweise auch um den Sekundärkreislauf eines Wärmetauschers handeln.

Im Heizungskreislauf ist bei diesem Ausführungsbeispiel

- 25 -

noch ein Differenzdruck-Überströmventil 55 eingebaut. Es
ist einerseits mit der mit dem Anschlußstutzen 4 der Mischeinrichtung verbundenen Leitung 76 und andererseits mit
der zum Anschlußstutzen 3 der Mischeinrichtung führenden
Leitung 77 verbunden. Außer den bekannten Vorteilen derartiger Differenzdruck-Überströmventile erreicht man im
vorliegenden Falle ein ständiges Umströmen des Fühlers 15
des thermostatischen Arbeitselements mit dem Vorlauffühler
auch bei geschlossenen Radiator-Thermostatventilen 72 und
73. Insofern ermittelt also der Vorlauffühler stets die
der Mischerstellung tatsächlich zugeordneten Vorlauftemperatur, was bei fehlendem Differenzdruck-Überströmventil und geschlossenen Heizkörper-Thermostatventilen
mit zunehmender Schließdauer der letzteren immer weniger
gewährleistet ist.

Die thermostatischen Arbeitselemente der vorbeschriebenen
Ausführungsformen arbeiten vorzugsweise mit Dehnstoff, das
heißt, einem Wachs oder wachsähnlichen Stoff. Wenn man stattdessen Flüssiggas verwendet, so kann man auf das Stellglied
des Mischers oder eines Ventils zwei in entgegengesetzten Richtungen arbeitende Faltenbälge 81 und 82 einwirken lassen. Das
Stellorgan ist bei diesem Schema als schwenkbarer Hebel 78 angegeben. Der Vorlauftemperaturfühler trägt dabei die Bezugszahl
79 und der Rücklauffühler die Bezugszahl 80.

A n s p r ü c h e

1.  Regelvorrichtung für eine Heizungsanlage, bei der mindestens
ein Teil der Heizkörper einzeln temperaturgeregelt ist, gekennzeichnet durch eine von der Temperaturdifferenz zwischen Vor-
und Rücklauf beeinflußbare Steuereinrichtung (16, 19; 71) für
den Vorlauf und/oder den Rücklauf

2.  Vorrichtung nach Anspruch 1. dadurch gekennzeichnet,
daß durch Regelung der Durchflußquerschnitte für die einzelnen
Ströme oder Teilströme bei steigender Rücklauftemperatur die
Zuströmmenge (48) des vom Kessel kommenden heißen Mediums vergrößert und/oder die Menge des beizumischenden Mediums (51)
verkleinert wird.

3.  Vorrichtung nach Anspruch 2, dadurch gekennzeichnet,
daß die Steuereinrichtung ein thermostatisches Arbeitselement (16) mit einem Vorlauffühler (15) und ein thermostatisches Arbeitselement (19) mit einem Rücklauffühler
(20) aufweist.

4.  Vorrichtung nach Anspruch 3, dadurch gekennzeichnet,
daß sich die verschiebbaren Organe (17, 21) der thermostatischen Arbeitselemente (16, 19) bei Temperaturanstieg
in gleicher Richtung bewegen und sie insbesondere kraftschlüssig miteinander gekuppelt sind.

5. Vorrichtung nach Anspruch 3 oder 4, dadurch gekennzeichnet, daß die thermostatischen Arbeitselemente (16, 19)
auf einen Schieber (15) od. dgl. einwirken, der den Zuströmquerschnitt (48) für das heiße Medium in dem Maße
vergrößert, wie er den Zuströmquerschnitt (51) für das
beizumischende Medium verkleinert.

6. Vorrichtung nach Anspruch 5, dadurch gekennzeichnet,
daß der Schieber als rohrförmiger Kolbenschieber (5)
ausgebildet ist, der in der einen Verschiebeendlage mit
seiner Mantelfläche wenigstens eine Zuströmöffnung überdeckt und in der anderen Verschiebeendlage mit seiner
in Durchströmrichtung (54) hinteren ringförmigen Stirnfläche eine Zuströmöffnung schließt.

7. Vorrichtung nach Anspruch 6, dadurch gekennzeichnet,
daß das thermostatische Arbeitselement (16) mit dem Vorlauffühler als Dehnstoffelement mit Arbeitskolben (17)
ausgebildet ist, dessen Gehäuse (15) fest mit dem Kolbenschieber (5) verbunden und dessen Arbeitskolben (17) sich
am einen Ende einer den Schieber zentrisch durchsetzenden
Spindel (8) abgestützt ist, wobei der Arbeitskolben entgegen
der Durchströmrichtung (54) des Heizmediums durch das Schieberinnere ausfahrbar ist.

8. Vorrichtung nach Anspruch 7, dadurch gekennzeichnet, daß das Gehäuse (15) des thermostatischen Arbeitselements (16) mit dem Vorlauffühler und der Kolbenschieber (5) mittels eines Gewindes (14) miteinander verbunden sind.

9. Vorrichtung nach Anspruch 7 oder 8, dadurch gekennzeichnet, daß das andere Ende der Spindel (8) zur kraftschlüssigen Verbindung der verschiebbaren Organe (17, 21) der beiden thermostatischen Arbeitselemente (16, 19) am verschiebbaren Organ (21) des Arbeitselements (19) mit dem Rücklauffühler (20) anliegt, wobei sich dieses verschiebbare Organ (21) bei Erhöhung der Rücklauftemperatur vom Spindelende wegbewegt, und daß das andere Spindelende fest mit dem ihm zugeordneten, verschiebbaren Organ (17) des Arbeitselements (16) mit dem Vorlauffühler (15) verbunden oder mittels einer Feder (12) daran angepreßt ist.

10. Vorrichtung nach Anspruch 9, dadurch gekennzeichnet, daß die Feder (12) insbesondere als Schraubendruckfeder ausgebildet ist und den Kolbenschieber (5) entgegen der Durchströmrichtung (54) belastet.

11. Vorrichtung nach Anspruch 9 oder 10, dadurch gekennzeichnet, daß der verschiebbare Teil (21) des Arbeitselements (19) mit dem Rücklauffühler über eine Kapillare

(22) mit seinem Ausdehnungs-Fühlerelement (20) und abnehmbar

mit dem Gehäuse (1) der Regelvorrichtung verbunden ist

12. Vorrichtung nach Anspruch 11, dadurch gekennzeichnet, daß der verschiebbare Teil (21) des Arbeitselements (19) mit dem Rücklauffühler (20) mittels einer Feder (30), insbesondere Schraubendruckfeder, an das zugeordnete Spindelende gedrückt ist.

13. Vorrichtung nach Anspruch 12, dadurch gekennzeichnet, daß nach der Mischeinrichtung in den Vorlauf ein Differenz-

druck-Überströmventil (55) eingebaut ist,

14. Vorrichtung nach einem oder mehreren der vorhergehenden Ansprüche, dadurch gekennzeichnet, daß die thermostatischen Arbeitselemente mit Gas als Ausdehnungsmedium gefüllt und unmittelbar gegeneinander geschaltet sind, wobei ein zwischen ihnen liegendes Stellglied auf die Steuereinrichtung einwirkt.

15. Vorrichtung nach einem oder mehreren der vorhergehenden Ansprüche, dadurch gekennzeichnet, daß der spezifische Arbeitshub des Vorlauffühlers (15) kleiner ist als derjenige des Rücklauffühlers (20).

16. Vorrichtung nach einem oder mehreren der vorhergehenden Ansprüche, dadurch gekennzeichnet, daß das thermostatische Arbeitselement mit dem Rücklauffühler einen bei niedrigen Temperaturen wirksamen Endanschlag aufweist und das thermostatische Arbeitselement mit dem Vorlauffühler einen Arbeitsbereich besitzt, der über den Temperaturbereich, in welchem der Endanschlag wirksam ist, hinausgeht

FIG.1

FIG.2

0001615

1/3

FIG.3

0001615

FIG.4

0001615

**Europäisches Patentamt**

## EUROPÄISCHER RECHERCHENBERICHT

Nummer der Anmeldung
EP 78 10 1123

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 1 803 248 (BERTRAMS) <br> * Seite 1, Absatz 1; Seite 4, Absatz 1; Seite 7, Absatz 3; Figur 3 * <br> --- | 1,3 |
| X | DE - B - 1 579 854 (BRAUKMANN) <br> * Spalte 1, Zeilen 26-51; Figur 1 * <br> --- | 1,3,11 |
| | FR - A - 2 210 749 (TOUR) <br> * Ansprüche 1,3; Seite 8, Zeilen 5-31; Figuren 1,3 * <br> --- | 2,5-7,16 |
| | DE - A - 2 603 924 (VERNET) <br> * Seite 6, letzte Absatz; Seite 8, ganz; Seite 10, Absatz 2; Figuren 1,2,5 * <br> --- | 4,5,7,9-11 |
| | US - A - 3 179 337 (BAUERLEIN) <br> * Spalte 2, Zeilen 25-40; Spalte 3, Zeilen 3-33 * <br> --- | 6 |
| | DE - A - 2 226 865 (VAILLANT) <br> * Seite 5, Absazt 3 * <br> --- | 13 |
| A | DE - A - 2 358 754 (SCHUMACHER) | 1 |
| A | DE - A - 2 311 691 (VAILLANT) <br> ----- | 1 |

**KLASSIFIKATION DER ANMELDUNG (Int.Cl.³)**

F 24 D 3/02
G 05 D 23/13
23/12

**RECHERCHIERTE SACHGEBIETE (Int. Cl.³)**

F 24 D
G 05 D

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-01-1979 | CRAB |

EPA form 1503.1 06.78